# EUROPEAN PATENT SPECIFICATION

(11) **EP 3 958 125 B1**
(45) Date of publication and mention of the grant of the patent: **10.04.2024**
(21) Application number: 20808903.7
(22) Date of filing: 14.02.2020
(51) Int. Cl.: G06F 11/10, G06F 3/06, G06F 11/14, G06F 11/20

(54) **REDUNDANT ARRAY OF INDEPENDENT DISKS (RAID) MANAGEMENT METHOD, RAID CONTROLLER AND SYSTEM**
VERWALTUNGSVERFAHREN FÜR REDUNDANTES ARRAY VON UNABHÄNGIGEN FESTPLATTEN (RAID), RAID-STEUERUNG UND SYSTEM
PROCÉDÉ DE GESTION D'UN RÉSEAU REDONDANT DE DISQUES INDÉPENDANTS (RAID), CONTRÔLEUR ET SYSTÈME RAID

(30) Priority: 17.05.2019 CN 201910414552
(43) Date of publication of application: 23.02.2022
(73) Proprietor: Huawei Technologies Co., Ltd., Shenzhen, Guangdong 518129 (CN)
(72) Inventor: ZHENG, Yuanyue, Shenzhen, Guangdong 518129 (CN); WU, Dengben, Shenzhen, Guangdong 518129 (CN); ZHU, Zhiming, Shenzhen, Guangdong 518129 (CN)
(74) Representative: Gill Jennings & Every LLP
(86) International application number: PCT/CN2020/075160
(87) International publication number: WO 2020/233177

(56) References cited:
- WO-A1-2013/184923
- CN-A- 108 958 656
- US-A1- 2017 337 107

## Description

### TECHNICAL FIELD

This application relates to the field of information technologies, and more specifically, to a redundant array of independent disks RAID management method, and a RAID controller and system.

### BACKGROUND

A redundant array of independent disks (Redundant Array of Independent Disks, RAID) is a disk group including a plurality of disks, and therefore, a RAID has higher storage performance than a single disk and provides a data backup technology. Different manners of combining disks in a RAID are referred to as RAID levels, including a RAID 1, a RAID 5, and a RAID 10.

In a RAID group, each disk separately manages validity of user data in a storage medium of the disk. When a failure occurs on any disk, validity information of user data is lost, and validity of the user data cannot be used in a process of recovering the data of the RAID group, thereby causing a data recovery failure. Therefore, how to provide a more effective RAID management method is a technical problem to be urgently resolved.

CN108958656A relates to dynamic strip system design method based on RAID5 solid-state disk array. WO2013184923A1 relates to memory system management.

### SUMMARY

This application provides a redundant array of independent disks management method and a redundant array of independent disks controller, so that performance of a RAID system can be improved.

The invention has been defined in the independent claims. Further specific technical features have been defined in the dependent claims.

According to a first aspect, this application provides a redundant array of independent disks RAID management method. The method includes: A RAID controller obtains a data processing instruction, where the RAID controller is connected to a plurality of disks, at least two disks in the plurality of disks form a RAID group, the RAID group includes a plurality of strips, the data processing instruction is used to instruct to process data corresponding to a first strip unit set, the first strip unit set includes at least one strip unit, and the at least one strip unit belongs to at least one strip in the plurality of strips; the RAID controller determines, in strip data information, data validity information of each strip unit in the first strip unit set, where the strip data information includes data validity information of each strip unit that is in the RAID group and that is used to store user data, and the strip data information is stored in the RAID controller; and the RAID controller executes the data processing instruction based on the data validity information of each strip unit in the first strip unit set.

In this application, the RAID controller may record data validity information of all strip units used to store user data; after receiving a data processing instruction, may first determine data validity information of a strip unit in which the data processing instruction is located; and execute the data processing instruction based on the data validity information. In the foregoing technical solution, the strip data information stored in the RAID controller can be used to execute the data processing instruction, thereby improving performance of the RAID group. In the foregoing technical solution, unified management of data validity information of disks by the RAID controller can also be implemented, thereby avoiding a problem of loss of data validity information due to any disk failure. The RAID controller may store data validity information of a strip unit in a solid-state drive, or may store data validity information of a strip unit in a hard disk drive. Therefore, by using the technical solution provided in this application, the RAID controller can use data validity information to read, write, or reconstruct data stored in the RAID group regardless of whether a disk in a RAID system is an SSD or a hard disk drive, thereby improving performance of reading, writing, and reconstruction of the RAID group.

In the first aspect, before the RAID controller obtains the data processing instruction, the method further includes: The RAID controller creates initial strip data information, where data validity information of each strip unit in the initial strip data information is invalid.

In the foregoing technical solution, all data validity information is set to be invalid during initialization, so that a check value does not need to be calculated during initialization.

In the first aspect, that the RAID controller executes the data processing instruction based on the data validity information of each strip unit in the first strip unit set includes: The RAID controller determines whether the first strip unit set includes all strip units used to store user data in N1 strips, when the data processing instruction is used to instruct to delete user data stored in each strip unit in the first strip unit set, where N1 is a positive integer greater than or equal to 1; and if the first strip unit set includes all the strip units used to store user data in the N1 strips, updates the validity information of each strip unit in the first strip unit set in the strip data information to invalid; or if the first strip unit set includes a part of strip units that are in one strip and that are used to store user data, updates the data validity information of each strip unit in the first strip unit set in the strip data information to to-be-collected; when N1 is a positive integer greater than or equal to 2, if the first strip unit set includes all strip units used to store user data in N1-1 strips and K strip units used to store user data in one strip, updates data validity information of all the strip units in the strip data information that are used to store user data in the N1-1 strips to invalid, and updates data validity information of the K strip units used to store user data to to-be-collected, where K is a positive integer greater than or equal to 1 and less than M, and M indicates a maximum quantity of strip units that are used to store user data and that are included in one strip. In the foregoing technical solution, if data of only a part of strip units in one strip is deleted, data validity information of the strip units can be updated to to-be-collected. In this way, check values of the strips do not need to be recalculated, so that performance of the RAID system can be improved.

With reference to the first aspect, in a possible implementation of the first aspect, that the RAID controller executes the data processing instruction based on the data validity information of each strip unit in the first strip unit set includes: The RAID controller updates the data validity information of each strip unit in the first strip unit set in the strip data information to valid, when the data processing instruction is used to instruct to write data to the first strip unit set.

With reference to the first aspect, in a possible implementation of the first aspect, the method further includes: The RAID controller determines a second strip unit set, where the second strip unit set includes a strip unit that is in a strip including the strip unit in the first strip unit set and that is with to-be-collected data validity information; and the RAID controller updates data validity information of each strip unit in the second strip unit set in the strip data information to invalid.

With reference to the first aspect, in a possible implementation of the first aspect, the method further includes: When a failure occurs on one of disks forming the RAID group, the RAID controller determines, based on the strip data information, whether data validity information of a t^{th} strip unit that is in the faulty disk and that is used to store user data is valid, where t=1, ..., or T, and T indicates a quantity of all strip units used to store user data in the faulty disk; and when the data validity information of the t^{th} strip unit used to store user data is valid, determines, based on user data in a third strip unit set and a check value of a strip including the t^{th} strip unit used to store user data, data in the t^{th} strip unit used to store user data, and writes the user data in the t^{th} strip unit used to store user data to a hot spare disk, where the third strip unit set includes a strip unit that is in the strip including the t^{th} strip unit used to store user data and that is with valid data validity information and includes a strip unit that is in the strip including the t^{th} strip unit used to store user data and that is with to-be-collected data validity information. In the foregoing technical solution, strip data information can be directly used to determine a strip unit that needs to be reconstructed. Therefore, performance of the RAID system can be improved.

According to a second aspect, this application further provides a RAID controller, and the RAID controller includes a unit configured to implement the first aspect or any possible implementation of the first aspect.

According to a third aspect, this application provides a computer-readable storage medium, and the computer-readable storage medium stores instructions used to implement the method according to the first aspect or any possible implementation of the first aspect.

According to a fourth aspect, this application provides a computer program product including instructions, and when the computer program product runs on a computer, the computer is enabled to perform the method according to the first aspect or any possible implementation of the first aspect.

According to a fifth aspect, this application provides a RAID controller, and the RAID controller includes a memory and a processor, where the memory stores program code, and the processor is configured to invoke the program code in the memory, to perform the method according to the first aspect or any possible implementation of the first aspect.

According to a sixth aspect, this application provides a RAID system, and the RAID system includes a disk and the RAID controller according to the second aspect or the fifth aspect.

### BRIEF DESCRIPTION OF DRAWINGS

FIG. 1 is a schematic structural block diagram of a RAID system;
FIG. 2 is a schematic diagram of strip data information according to an implementation of this application;
FIG. 3 is a schematic flowchart of initializing strip data information according to an implementation of this application;
FIG. 4 is a schematic flowchart of a deletion operation according to an implementation of this application;
FIG. 5 is a schematic flowchart of a writing operation according to an implementation of this application;
FIG. 6 is a schematic flowchart of a reconstruction operation according to an implementation of this application;
FIG. 7 is a schematic structural diagram of a RAID controller according to an implementation of this application; and
FIG. 8 is a structural block diagram of a storage system according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

To help a person skilled in the art better understand the technical solutions of this application, some basic concepts used in the implementations of this application are briefly introduced first.

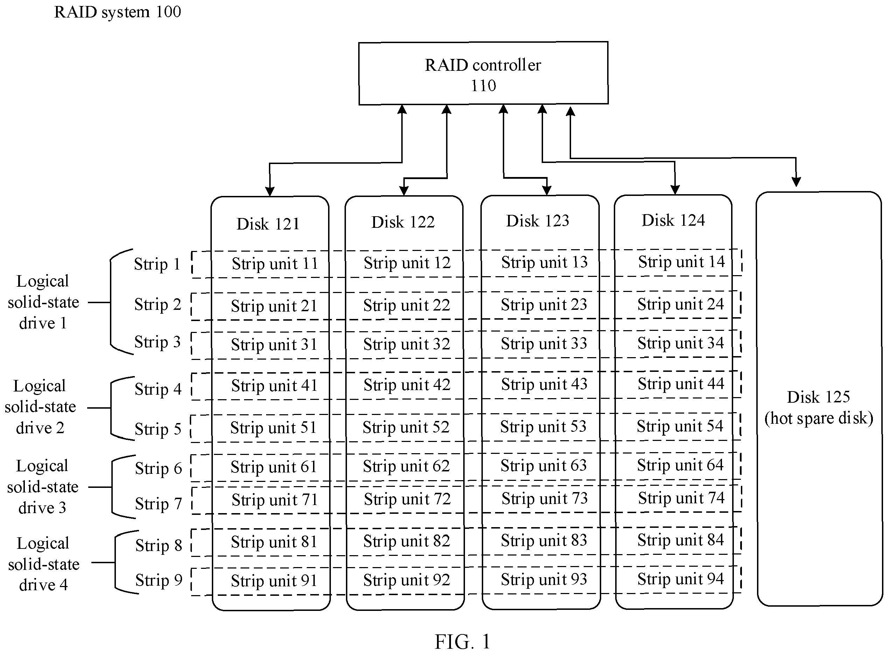

FIG. 1 is a schematic structural block diagram of a RAID system. A RAID system 100 shown in FIG. 1 includes four disks used to form a RAID group (that is, a disk 121, a disk 122, a disk 123, and a disk 124), one disk used as a hot spare disk (that is, a disk 125), and a RAID controller 110.

The disks may be solid-state drives (solid state drive, SSD), or may be hard disk drives, for example, serial attached small computer system interface (serial attached small computer system interface, SAS) disks or serial advanced technology attachment (serial advanced technology attachment, SATA) disks.

As shown in FIG. 1, the RAID system 100 further includes a logical solid-state drive 1, a logical solid-state drive 2, a logical solid-state drive 3, and a logical solid-state drive 4. The logical solid-state drive 1 to the logical solid-state drive 4 form a RAID group according to a RAID level 5 rule.

As shown in FIG. 1, each logical solid-state drive in the logical solid-state drive 1 to the logical solid-state drive 4 includes a plurality of strips (strip). Each strip includes a plurality of strip units (strip units). A plurality of strip units used to form one strip are located in different disks. The logical solid-state drive 1 is used as an example. The logical solid-state drive 1 includes a strip 1. The strip 1 includes a strip unit 11, a strip unit 12, a strip unit 13, and a strip unit 14. The strip unit 11 is located in the disk 121, the strip unit 12 is located in the disk 122, the strip unit 13 is located in the disk 123, and the strip unit 14 is located in the disk 124.

For example, that the strip unit 11 is located in the disk 121 means that one or more storage units in the disk 121 form the strip unit 11. As shown in FIG. 1, in addition to the strip unit 11, the disk 121 further includes a strip unit 21, a strip unit 31, and the like. Different strip units in the disk 121 are formed by different storage units.

A storage unit indicates a minimum unit that can be used for reading and writing operations in a disk. Different types of disks have different storage units. For example, a minimum storage unit of an SSD is a page (page). A minimum storage unit of a hard disk drive is a sector. Page sizes of different types of SSDs may be different. For example, a conventional page size may be 2 KB, 4 KB, or 8 KB. Similarly, sector sizes of different types of hard disk drives can also be different.

A size of a strip unit (which may also be referred to as a strip length (strip length), a block size (block size), a strip size (strip size), or the like) can be specifically configured based on requirements. A size of a strip unit usually ranges from 2 KB to 512 KB. When a strip unit has a smaller size, a file is split into more strip units for storage. The file is distributed on more disks for storage, and transmission performance can be improved. However, because there is a relatively large quantity of strip units to be positioned, performance of positioning the strip units is reduced. Correspondingly, when a strip unit has a larger size, transmission performance is lower, and positioning performance is higher. Therefore, a size of a strip unit can be configured based on different application types, different performance requirements, and the like.

In a possible implementation, in different logical hard disks of a same RAID group, strip units forming a same strip may be classified into strip units used to store user data and strip units used to store a check value. "User data" in the implementations of this application may be understood as data written by a file system.

The strip 1 shown in FIG. 1 is used as an example. Strip units in the strip 1 used to store user data may be the strip unit 11, the strip unit 12, and the strip unit 13; and a strip unit used to store a check value may be the strip unit 14.

An implementation of this application provides a RAID system. The RAID system includes a RAID controller and a plurality of disks. The RAID controller and the plurality of disks may communicate with each other and transmit a control and/or data signal through an internal connection channel. The internal connection channel includes a bus, for example, a peripheral component interconnect express (Peripheral Component Interconnect express, PCIe) bus or another bus used for connection between different components. The plurality of disks form a RAID group. Some disks in the plurality of disks form a logical solid-state drive in the RAID group, and other disks in the plurality of disks form a hot spare disk in the RAID group. The RAID controller stores strip data information. The strip data information is used to record a status of each strip unit in the RAID group. The RAID controller may execute a received data processing instruction based on the stored strip data information.

The strip data information may include a plurality of pieces of data validity information. The pieces of data validity information are in a one-to-one correspondence with the strip units used to store user data. The data validity information is used to record a status of the corresponding strip unit used to store user data. For ease of description, the data validity information corresponding to the strip unit used to store user data can be referred to as the data validity information of the strip unit used to store user data.

The status of the strip unit used to store user data may be any one of the following: valid, to-be-collected, and invalid.

"Valid" indicates that a file system has written user data to the strip unit, and the user data has not been deleted by the file system.

"To-be-collected" indicates that the user data in the strip unit has been deleted by the file system, but a data emptying operation is not performed.

"Invalid" indicates that the file system has never written any data to the strip unit, or that user data in the strip unit has been deleted by the file system and a data emptying operation is already performed.

A check value of a strip is determined based on user data in valid and to-be-collected strip units in the strip. The strip 1 is used as an example. It is assumed that the strip unit 1 to the strip unit 3 are strip units used to store user data, and the strip unit 4 is a strip unit used to store a check value. It is assumed that statuses of the strip unit 1 to the strip unit 3 are valid or to-be-collected. In this case, the check value stored in the strip unit 4 is determined based on user data stored in the strip unit 1 to the strip unit 3. It is assumed that a status of the strip unit 1 is invalid, and statuses of the strip unit 2 and the strip unit 3 are valid or to-be-collected. In this case, the check value stored in the strip unit 4 is determined based on user data stored in the strip unit 2 and the strip unit 3.

It can be understood that strip units with states of valid, invalid, and to-be-collected are all strip units used to store user data. Therefore, a strip unit in descriptions of a status of a strip unit and data validity information of a strip unit is a strip unit used to store user data.

A status of a strip unit may be distinguished based on whether user data in the strip unit is used for calculating a check value. If user data in a strip unit has been deleted by the file system, but the user data in the strip unit is used for calculating a check value, a status of the strip unit is to-be-collected. If user data in a strip unit has been deleted by the file system, and the user data in the strip unit is not used for calculating a check value, a status of the strip unit is invalid.

As described above, one strip unit may include a plurality of storage units. In some cases, the file system may write user data to only a part of storage units in one strip unit. In this case, a status of the strip unit is valid. In other words, whenever one strip unit includes at least one storage unit to which user data has been written, and the user data has not been deleted, a status of the strip unit is valid. Correspondingly, user data in all storage units in strip units with states of invalid and to-be-collected has been deleted by the file system.

The file system is software used to manage and store file information in an operating system. The operating system is a running operating system, for example, WindowsTM, Ubuntu^{™}, macOS, Android^{™}, or iOS^{™}, in a computer device. The computer device mentioned in this application indicates any electronic device that can access a RAID, for example, a desktop computer, a laptop computer, a tablet computer, or a mobile phone. More specifically, the computer device may include a processor and a storage apparatus, and the storage apparatus is configured to store instructions of the operating system. The processor executes the instructions in the storage apparatus, to run the operating system. Therefore, an operation performed on the strip unit, the RAID controller, or the like by the file system or the operating system mentioned in this application is equivalent to an operation of the processor.

For ease of description, user data stored in a strip unit with corresponding valid data validity information is referred to as valid data; user data stored in a strip unit with corresponding invalid data validity information is referred to as invalid data; and user data stored in a strip unit with corresponding to-be-collected data validity information is referred to as to-be-collected data.

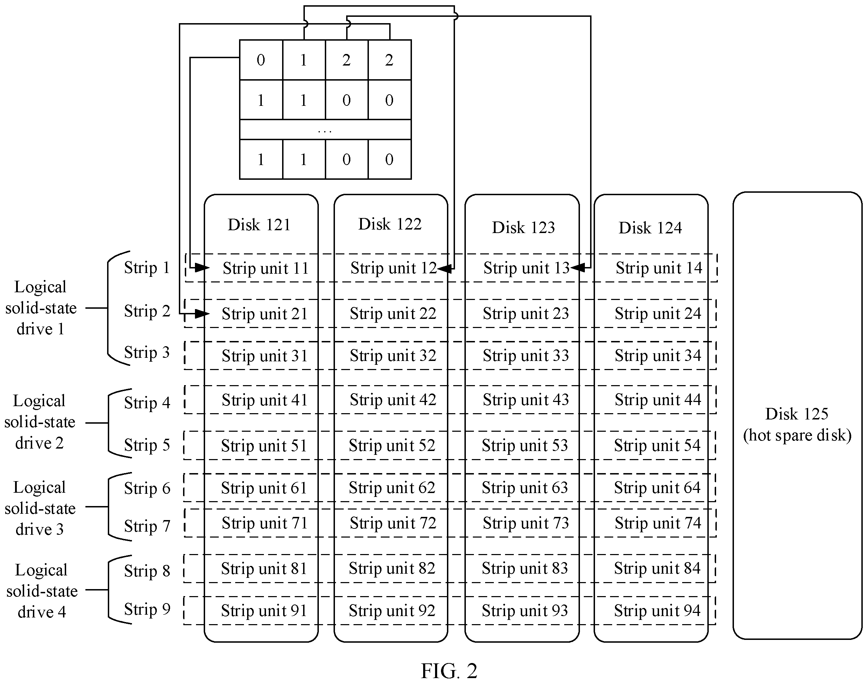

FIG. 2 is a schematic diagram of strip data information according to an implementation of this application. In the strip data information shown in FIG. 2, data validity information of each strip unit is recorded by using a bitmap. In addition to that data validity information of each strip unit is recorded by using the bitmap shown in FIG. 2, the data validity information of each strip unit may further be recorded by using, for example, a page table. In the strip data information shown in FIG. 2, 0 is used to indicate invalid data, 1 is used to indicate valid data, and 2 is used to indicate invalid data.

As shown in FIG. 2, data validity information of a strip unit 11 is invalid, data validity information of a strip unit 12 is valid, and data validity information of a strip unit 13 and a strip unit 21 is valid.

The data processing instruction is used to instruct to process data corresponding to a first unit set.

Optionally, in some possible implementations, the data processing instruction may be used to instruct to delete user data stored in one or more strip units that are in a RAID group and that are used to store user data.

Optionally, in some other possible implementations, the data processing instruction may be used to instruct to write user data to one or more strip units in the RAID group.

Optionally, in some other possible implementations, the data processing instruction may be used to instruct to read user data stored in one or more strip units that are in the RAID group and that are used to store user data.

For ease of description, the one or more strip units on which an operation of deletion, writing, or reading needs to be performed as instructed by the data processing instruction are referred to as a first strip unit set below; and the operation (that is, deletion, writing, or reading) on the first strip unit set as instructed by the data processing instruction is referred to as a target operation below. Data corresponding to the first strip unit set is data processed in the target operation. For example, if the target operation is deletion, the data corresponding to the first strip unit set is user data that is stored in a strip unit in the first strip unit set and that needs to be deleted in the deletion operation; if the target operation is a writing operation, the data corresponding to the first strip unit set is user data that needs to be written to a strip unit for storage in the first strip unit set; or if the target operation is a reading operation, the data corresponding to the first strip unit set is user data that is stored in a strip unit in the first strip unit set and that needs to be read.

That the RAID controller executes the received data processing instruction based on the stored strip data information may include: The RAID controller may determine, in the strip data information stored in the RAID controller, data validity information of each strip unit in the first strip unit set, and execute the data processing instruction based on the data validity information of each strip unit in the first strip unit set.

In this application, the RAID controller records data validity information of all strip units used to store user data; after receiving a data processing instruction, first determines data validity information of a strip unit in which the data processing instruction is located; and execute the data processing instruction based on the data validity information, thereby improving performance of the RAID group. In addition, in the foregoing technical solution, unified management of data validity information of disks by the RAID controller can also be implemented, thereby avoiding a problem of loss of data validity information due to any disk failure. The RAID controller may store data validity information of a strip unit in a solid-state drive, or may store data validity information of a strip unit in a hard disk drive. Therefore, by using the technical solution provided in this application, the RAID controller uses data validity information to read, write, or reconstruct data stored in the RAID group regardless of whether a disk in a RAID system is an SSD or a hard disk drive, thereby improving performance of reading, writing, and reconstruction of the RAID group.

In a possible implementation, the RAID controller may further record validity information of a storage unit, to implement finer-granularity management of a disk in a storage system.

The following briefly describes, with reference to different types of data processing instructions, how the RAID controller executes a received data processing instruction based on stored strip data information.

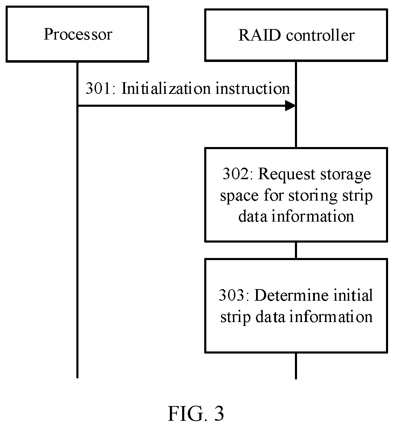

FIG. 3 is a schematic flowchart of initializing strip data information according to an implementation of this application.

301: A RAID controller receives an initialization instruction sent by a processor.

As described above, the processor may execute instructions of an operating system stored in a storage apparatus, to run the operating system. The operating system may send the initialization instruction to the RAID controller. Therefore, the initialization instruction received by the RAID controller may be considered as having been sent by the processor, or may be considered as having been sent by the operating system run by the processor. For ease of description, in implementations in FIG. 3 to FIG. 5, instructions received by the RAID controller are considered as having been sent by the processor.

Specifically, after a RAID group is established, the processor first sends an initialization instruction to the RAID controller, and the initialization instruction is used to instruct to initialize strip data information.

302: When the RAID controller receives the initialization instruction, the RAID controller requests storage space for storing the strip data information.

303: When the storage space is obtained after the request, the RAID controller determines initial strip data information, where all data validity information in the initial strip data information is the same.

For example, in some possible implementations, the RAID controller may set all data validity information in the RAID group to be invalid.

For another example, in some other possible implementations, the RAID controller may set all data validity information in the RAID group to be to-be-collected.

If all the data validity information in the RAID group is set to be to-be-collected during initialization, a check value further needs to be determined based on user data in a strip unit during initialization, and the determined check value is stored. If all the data validity information in the RAID group is set to be invalid during initialization, a process of determining a check value does not need to be performed.

It is assumed that the RAID controller uses a bitmap to store the data validity information, and it is assumed that 0 indicates invalid data. After the storage space used to store the strip data information is obtained after the request, the RAID controller may clear out the storage space, so that all the data validity information in the RAID is set to be invalid.

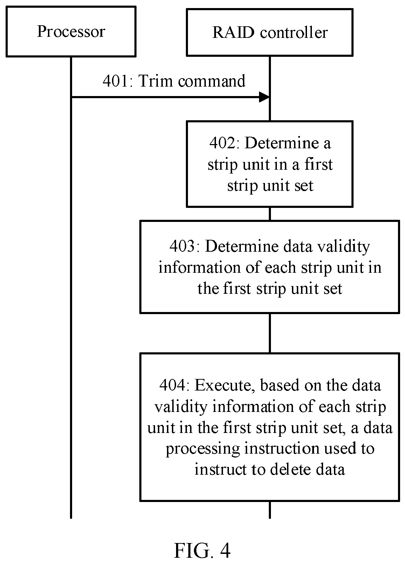

FIG. 4 is a schematic flowchart of a deletion operation according to an implementation of this application.

401: A RAID controller receives a data processing instruction that is sent by a processor and that is used to instruct to delete data. A disk in a RAID group in a RAID system is represented as a logical solid-state drive for an operating system. In this case, the data processing instruction may be a trim command.

402: The RAID controller may determine a strip unit corresponding to the trim command, that is, a strip unit in a first strip unit set.

Specifically, the trim command includes a start address and length information of user data to be removed. The RAID controller may determine, based on the start address and the length information, a strip unit that stores the user data to be removed, that is, a strip unit in the first strip unit set.

403: The RAID controller determines data validity information of each strip unit in the first strip unit set in strip data information stored in the RAID controller.

404: The RAID controller executes, based on the data validity information of each strip unit in the first strip unit set, the data processing instruction used to instruct to delete data.

That the RAID controller executes, based on the data validity information of each strip unit in the first strip unit set, the data processing instruction used to instruct to delete data may include: The RAID controller updates, based on the strip unit in the first strip unit set, the data validity information that is of each strip unit in the first strip unit set and that is stored in the RAID controller.

A quantity of strip units included in the first strip unit set may be a positive integer greater than or equal to 1. The RAID controller may determine whether the first strip unit set includes all strip units used to store user data in N1 strips, where N1 is a positive integer greater than or equal to 1.

If the first strip unit set includes all the strip units used to store user data in the N1 strips, the RAID controller updates the data validity information of each strip unit in the first strip unit set in the stored strip data information to invalid.

Optionally, in some implementations, if the first strip unit set includes a part of strip units that are in one strip and that are used to store user data, the RAID controller may update the data validity information of the strip unit in the first strip unit set in the stored strip data information to to-be-collected.

Optionally, in some other implementations, if the first strip unit set includes a part of strip units that are in one strip and that are used to store user data, the RAID controller may alternatively update the data validity information of each strip unit in the first strip unit set in the stored strip data information to invalid.

Optionally, in some implementations, if N1 is a positive integer greater than or equal to 2, and the first strip unit set includes all strip units used to store user data in N1-1 strips and K strip units used to store user data in one strip, the RAID controller may update data validity information of all strip units that are in the N1-1 strips in the stored strip data information to invalid, and update data validity information of the K strip units in the strip data information to to-be-collected, where K is a positive integer greater than or equal to 1 and less than M, and M indicates a maximum quantity of strip units that are used to store user data and that are included in one strip. In other words, one strip may include at most M strip units used to store user data. Setting the data validity information of the K strip units to be to-be-collected can reduce a quantity of times of calculating the check value.

Optionally, in some other implementations, if N1 is a positive integer greater than 2, and the first strip unit set includes all strip units used to store user data in N1-1 strips and K strip units used to store user data in one strip, the RAID controller may alternatively set data validity information of the K strip units in the strip data information to invalid.

The strip 1 shown in FIG. 2 is used again as an example. It is assumed that the strip data information shown in FIG. 2 is strip data information before the RAID controller receives the trim command. It is assumed that data that needs to be deleted as indicated by the trim command is user data stored in the strip unit 12. Before the trim command is received, a check value of the strip 1 is determined based on user data in the strip unit 12 and the strip unit 13 (for example, an XOR operation is performed on data in the strip unit 12 and user data in the strip unit 13). The check value is stored in the strip unit 14. After the trim command used to delete the user data stored in the strip unit 12 is received, if the data validity information of the strip unit 12 is set to be to-be-collected, there is no need to recalculate the check value. This is because a check value is determined based on data in a strip unit with to-be-collected data validity information and user data in a strip unit with valid data validity information. The RAID controller only updates the data validity information of the strip unit 12 from valid to to-be-collected after receiving the trim command, but does not change or delete the user data in the strip unit 12. Therefore, even if the data validity information of the strip unit 12 is changed from valid to to-be-collected, there is no need to recalculate a check value stored in the strip unit 14. If the data validity information of the strip unit 12 is updated to invalid, the check value of the strip 1 needs to be recalculated. This is because a data unit with invalid data validity information does not need to be included during calculation of a check value. Therefore, when the data validity information of the strip unit 12 is changed from valid to invalid, the check value of the strip 1 needs to be redetermined based on the strip unit 13. It can be learned that, when data in only a part of data units in one strip needs to be deleted, after data validity information of these data units is changed to to-be-collected, there is no need to recalculate a check value. Therefore, performance of the RAID group can be improved.

Optionally, in some implementations, when the first strip unit set includes all strip units that are of at least one strip and that are used to store user data, if the strip units are located in an SSD, the RAID controller may send a trim command to the SSD; or if the strip units are located in a hard disk drive, the RAID controller does not need to send a trim command to the hard disk drive.

The RAID system 100 shown in FIG. 1 is used as an example. It is assumed that user data in the RAID controller to be deleted as instructed is user data stored in the strip unit 11, the strip unit 12, and the strip unit 13. It is assumed that a disk 121, a disk 122, and a disk 123 are SSDs. In this case, the RAID controller can generate a trim command based on a start address and a length of the strip unit 11, and send the trim command to the disk 121; can generate a trim command based on a start address and a length of the strip unit 12, and send the trim command to the disk 122; and can generate a trim command based on a start address and a length of the strip unit 13, and send the trim command to the disk 123. It is assumed that the disk 121 is a hard disk drive, and the disk 122 and the disk 123 are SSDs. In this case, the RAID controller can generate a trim command based on a start address and a length of the strip unit 12, and send the trim command to the disk 122; and can generate a trim command based on a start address and a length of the strip unit 13, and send the trim command to the disk 123.

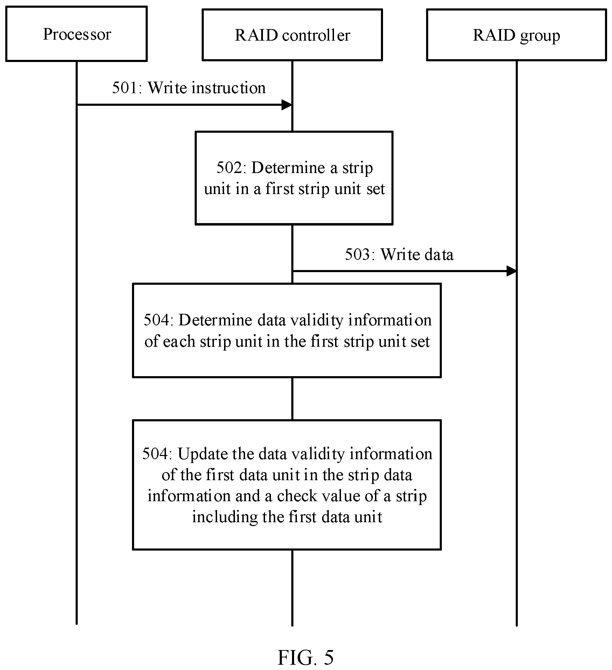

FIG. 5 is a schematic flowchart of a writing operation according to an implementation of this application.

501: A RAID controller receives a data processing instruction that is sent by a processor and that is used to instruct to write data. For ease of description, the data processing instruction used to instruct to write data is referred to as a write instruction below.

502: The RAID controller may determine a strip unit corresponding to the write instruction, that is, a strip unit in a first strip unit set.

Specifically, the write instruction includes a start address and length information of data that needs to be written. The RAID controller may determine, based on the start address and the length information, a strip unit to which data needs to be written, that is, a strip unit in the first strip unit set.

503: The RAID controller writes user data that needs to be written to the strip unit in the first strip unit set.

504: The RAID controller determines data validity information of each strip unit in the first strip unit set in strip data information stored in the RAID controller.

505: The RAID controller updates the data validity information of each strip unit in the first strip unit set and a check value of a strip including the strip unit in the first strip unit set.

Specifically, the RAID controller may determine whether the first strip unit set includes all strip units used to store user data in N2 strips, where N2 is a positive integer greater than or equal to 1.

If the first strip unit set includes all the strip units used to store user data in the N2 strips, the RAID controller may set the data validity information of the strip unit in the first strip unit set in the stored strip data information to be valid. In addition, when the first strip unit set includes all the strip units used to store user data in the N2 strips, the RAID controller may directly calculate a check value of each strip of the N2 strips based on user data written to the strip.

If the first strip unit set includes a part of strip units that are in one strip and that are used to store user data, the RAID controller may set the data validity information of the strip unit in the first strip unit set in the stored strip data information to be valid. Based on data validity information, in the stored strip data information, of all strip units that are of a strip including the strip unit in the first strip unit set and that are used to store user data, the RAID controller may determine to-be-collected data in the strip; and determine a check value of the strip based on the to-be-collected data and valid data (which includes written user data indicated by the write instruction and valid data in the strip before data is written to the first data unit) in the strip.

If N2 is a positive integer greater than or equal to 2, and the first strip unit set includes all strip units used to store user data in N2-1 strips and K strip units used to store user data in one strip, the RAID controller may set the data validity information of the strip unit in the first strip unit set in the stored strip data information to be valid, where K is a positive integer greater than or equal to 1 and less than M, and M indicates a maximum quantity of strip units that are used to store user data and that are included in one strip. The RAID controller may directly calculate a check value of each strip of the N2-1 strips based on user data written to the strip of the N2-1 strips. Based on data validity information, in the stored strip data information, of all strip units that are of a strip including the K strip units used to store user data and that are used to store user data, the RAID controller may determine to-be-collected data in the strip; and determine a check value of the strip based on the to-be-collected data and valid data (which includes user data written to the K data units and valid data in the strip before data is written to the K data units) in the strip.

Optionally, in some implementations, the RAID controller may further determine a second strip unit set based on the strip data information, where the second strip unit set includes a strip unit that is in a strip including the strip unit in the first strip unit set and that is with to-be-collected data validity information; and the RAID controller sets data validity information of the strip unit in the second strip unit set in the strip data information to be invalid. Optionally, if the strip unit in the second strip unit set is located in an SSD, the RAID controller may further determine a trim command based on a logical address and a length corresponding to the strip unit in the second strip unit set, and send the determined trim command to the corresponding SSD.

In the foregoing implementation, the RAID controller can identify invalid data based on data validity information, and the invalid data is not to be used when a check value is calculated. A new check value is determined based on user data in a strip unit to which the user data is newly written, valid data in the strip before the user data is written, and to-be-collected data. It can be learned that, in the foregoing process of determining the new check value, there is no need to read the invalid data, thereby improving data writing performance.

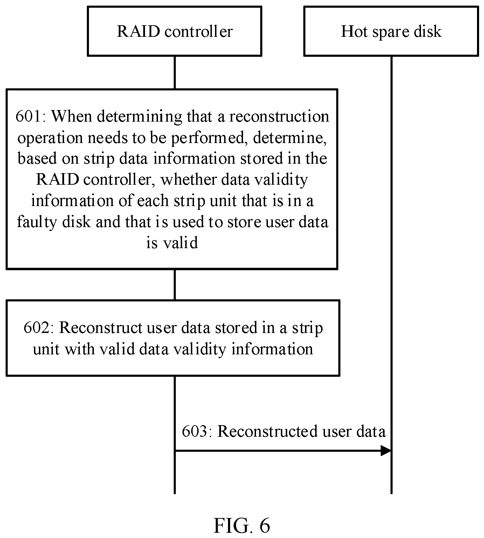

FIG. 6 is a schematic flowchart of a reconstruction operation according to an implementation of this application.

601: When determining that a reconstruction operation needs to be performed, a RAID controller determines, based on strip data information stored in the RAID controller, whether data validity information of each strip unit that is in a faulty disk and that is used to store user data is valid.

If a disk cannot be identified due to damage, aging, loose connection, or another cause, the disk is determined to be a faulty disk. In this case, a reconstruction operation needs to be performed in the disk.

602: The RAID controller reconstructs user data stored in a strip unit with valid data validity information.

603: The RAID controller writes reconstructed user data to a hot spare disk.

It is assumed that the RAID controller determines that data validity information of a t^{th} strip unit that is in the faulty disk and that is used to store user data is valid, the RAID controller reads user data in a third strip unit in a RAID group and a check value of a strip including the t^{th} strip unit, determines user data in the t^{th} strip unit in the faulty disk, and writes the determined user data to the hot spare disk, where the third strip unit is a strip unit that is in the strip including the t^{th} strip unit and that is with valid data validity information and is a strip unit that is in the strip including the t^{th} data unit and that is with to-be-collected data validity information. As described above, a check value of a strip is determined based on user data stored in strip units that are in the strip and that are with valid and to-be-collected data validity information. Therefore, the user data in the t^{th} strip unit can be determined based on the check value of the strip and the user data in the strip used to determine the check value (that is, user data in strip units other than the t^{th} strip unit that are in the strip and that are with valid and to-be-collected data validity information). For example, in some implementations, an XOR operation may be performed on user data that has been read (that is, the user data in the third strip unit) and the check value of the strip, to determine the user data in the t^{th} strip unit in the faulty disk and write the determined user data to the hot spare disk. Herein, t is a positive integer greater than or equal to 1 and less than or equal to T, and T indicates a quantity of all strip units used to store user data in the faulty disk.

It is assumed that the data validity information of the t^{th} strip unit that is in the faulty disk and that is used to store user data is invalid, the t^{th} strip unit used to store user data is skipped, and data validity information of a next strip unit used to store user data (that is, a (t+1)^{th} strip unit used to store user data) is to be determined.

In some possible implementations, if the data validity information of the t^{th} strip unit that is in the faulty disk and that is used to store user data is to-be-collected, data stored in the strip unit may not be recovered. In this case, the RAID controller may set the data validity information of the t^{th} strip unit in the stored strip data information to be invalid, and recalculates the check value of the strip based on valid data and to-be-collected data in the strip including the t^{th} strip unit.

In some other possible implementations, if the data validity information of the t^{th} strip unit that is in the faulty disk and that is used to store user data is to-be-collected, the user data in the third strip unit in the RAID and the check value of the strip including the t^{th} strip unit used to store user data may be read, to determine the user data in the t^{th} strip unit in the faulty disk, and write the determined user data to the hot spare disk. In other words, for the t^{th} strip unit, if the data validity information of the strip unit is valid or to-be-collected, the user data in the strip unit can be recovered by using a same policy. In this way, the check value of the strip including the strip unit does not need to be recalculated, so that performance of the RAID can be improved.

After the t^{th} strip unit used to store user data is processed, the data validity information of the next strip unit used to store user data (that is, the (t+1)^{th} strip unit used to store user data) can continue to be determined, and the (t+1)^{th} strip unit used to store user data is processed based on the determined data validity information. A processing manner for the (t+1)^{th} strip unit used to store user data is the same as a processing manner for the t^{th} strip unit used to store user data. It can be understood that, if t is equal to T, determining of data validity information of a strip unit in the faulty disk can be ended.

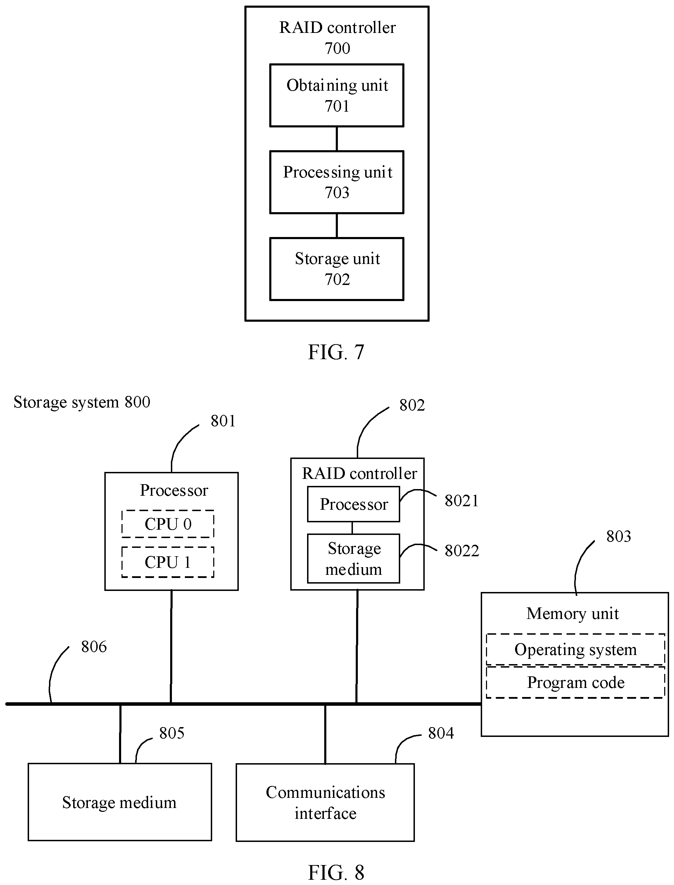

The foregoing describes in detail the redundant array of independent disks RAID management method provided in the implementations of this application with reference to FIG. 1 to FIG. 6. The following describes a redundant array of independent disks RAID management apparatus and a RAID controller provided in the implementations of this application with reference to FIG. 7 and FIG. 8.

FIG. 7 is a schematic structural diagram of a RAID controller according to an implementation of this application. As shown in FIG. 7, a RAID controller 700 may include an obtaining unit 701, a storage unit 702, and a processing unit 703.

The obtaining unit 701 is configured to obtain a data processing instruction, where the data processing instruction is used to instruct to process data corresponding to a first strip unit set, the first strip unit set includes at least one strip unit, the at least one strip unit belongs to at least one strip in a plurality of strips, and the plurality of strips belong to a RAID group formed by a plurality of disks that are connected to the RAID controller.

The storage unit 702 is configured for strip data information, where the strip data information includes data validity information of each strip unit that is in the RAID group and that is used to store user data.

The processing unit 703 is configured to determine, in the strip data information stored in the storage unit 702, data validity information of each strip unit in the first strip unit set.

The processing unit 703 is further configured to execute the data processing instruction based on the data validity information of each strip unit in the first strip unit set.

For specific functions and beneficial effects of the obtaining unit 701, the storage unit 702, and the processing unit 703, refer to descriptions of the foregoing method. Details are not provided herein again.

It should be understood that, the RAID controller in this implementation of this application may be implemented by an application-specific integrated circuit (application-specific integrated circuit, ASIC), or may be implemented by a programmable logic device (programmable logic device, PLD). The PLD may be a complex programmable logic device (complex programmable logic device, CPLD), a field programmable gate array (field programmable gate array, FPGA), a generic array logic (generic array logic, GAL), or any combination thereof. The RAID management methods shown in FIG. 3 to FIG. 6 may alternatively be implemented by using software, and in this case, the RAID controller and the modules may alternatively be software modules.

The RAID controller according to the implementations of this application can correspondingly perform the methods described in the implementations of this application. In addition, the foregoing operations and other operations and/or functions of the various units in the RAID controller are used to separately implement corresponding procedures of the methods in FIG. 3 to FIG. 6. For brevity, details are not provided herein again.

In this application, the RAID controller may record data validity information of all strip units used to store user data; after receiving a data processing instruction, may first determine data validity information of a strip unit in which the data processing instruction is located; and execute the data processing instruction based on the data validity information, thereby improving performance of the RAID group. In the foregoing technical solution, unified management of data validity information of disks by the RAID controller can also be implemented, thereby avoiding a problem of loss of data validity information due to any disk failure. The RAID controller may store data validity information of a strip unit in a solid-state drive, or may store data validity information of a strip unit in a hard disk drive. Therefore, by using the technical solution provided in this application, the RAID controller can use data validity information to read, write, or reconstruct data stored in the RAID group regardless of whether a disk in a RAID system is an SSD or a hard disk drive, thereby improving performance of reading, writing, and reconstruction of the RAID group.

FIG. 8 is a structural block diagram of a storage system according to an implementation of this application. A storage system 800 shown in FIG. 8 includes a processor 801, and the processor 801 is connected to one or more data storage devices. The data storage device may include a storage medium (storage medium) 805 and a memory unit (memory unit) 803. The storage medium 805 may be read-only, for example, a read-only memory (ROM); or may be readable/writable, for example, a hard disk or a flash memory. The memory unit 803 may be a random access memory (RAM). The memory unit 803 may be physically integrated into the processor 801, or may be constructed in an independent unit or a unit. A RAID controller 802 includes a processor 8021 and a storage medium 8022. The storage medium 8022 is configured to store program code used to implement the foregoing method. The processor 8021 executes the program code stored in the storage medium 8022, to complete steps performed by the RAID controller in the foregoing method.

The RAID controller 802, the storage medium 805, a communications interface 804, and the memory unit 803 communicate with each other through a bus 806; and the processor 801, the storage medium 805, the communications interface 804, and the memory unit 803 communicate with each other through the bus 806.

The processor 801 is a control center of the storage system 800, and provides sequencing and processing facilities for actions of executing instructions and performing interruption, a timer function, and another function. Optionally, the processor 801 includes one or more central processing units (CPU), such as a CPU 0 and a CPU 1 shown in FIG. 8. Optionally, the storage system 800 includes a plurality of processors. The processor 801 may be a single-core processor (single CPU), or may be a multi-core processor (multi CPU). Unless otherwise stated, a processor, a memory, or another component configured to implement tasks may be implemented as a universal component that is configured temporarily and that is used to implement tasks in a given time period or may be manufactured as a specific component used to implement tasks. For example, the term "processor" used in this specification indicates one or more devices or circuits. The processor 801 may alternatively be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, any conventional processor, or the like.

Program code executed by the CPU of the processor 801 may be stored in the memory unit 803 or the storage medium 805. Optionally, the program code (such as a kernel or a to-be-debugged program) is stored in the storage medium 805, and is duplicated to the memory unit 803 for execution by the processor 801. The processor 801 can execute at least one operating system, and the operating system may be Linux^{™}, Unix^{™}, Windows^{™}, Android^{™}, iOS^{™}, or the like. The processor 801 controls communication with a peripheral device and controls use of resources of a data processing device by controlling execution of another program or process, thereby controlling running of the storage system 800 to implement operation steps in the foregoing method.

The storage system 800 further includes the communications interface 804 configured for direct communication with another device or system or communication with another device or system through an external network. Optionally, the storage system 800 further includes an output device and an input device (which are not shown in FIG. 8). The output device is connected to the processor 801, and can display information in one or more manners. An example of the output device is a visual display device, for example, a liquid crystal display (LCD), a light-emitting diode (LED) display, a cathode-ray tube (CRT), or a projector. The input device is further connected to the processor 801, and can receive an input from the storage system 800 or a user in more other ways. An example of the input device includes a mouse, a keyboard, a touchscreen device, a sensing device, and the like.

The bus 806 may further include a power bus, a control bus, a status signal bus, and the like, in addition to a data bus. However, for clear description, various types of buses in the figure are marked as the bus 806.

It should be understood that, the RAID controller 802 in the storage system 800 can correspond to the RAID controller 700 in the implementations of this application, and can correspondingly perform steps performed by the RAID controller in the foregoing method. The storage medium 805 shown in FIG. 8 may include disks used to form a RAID group.

It should be understood that, in the storage system 800 according to this implementation of this application, the RAID controller 802 may correspond to the RAID controller shown in FIG. 7 in the implementations of this application, and may correspond to corresponding entities that perform the methods in FIG. 3 to FIG. 6 according to the implementations of this application. In addition, the foregoing operations and other operations and/or functions of the various modules in the RAID controller 802 are used to separately implement corresponding procedures of the methods in FIG. 3 to FIG. 6. For brevity, details are not provided herein again.

In this application, the RAID controller may record data validity information of a strip unit; after receiving a data processing instruction, may first determine data validity information of a strip unit in which the data processing instruction is located; and execute the data processing instruction based on the data validity information, thereby improving performance of the RAID group. In addition, in the foregoing technical solution, unified management of data validity information of disks by the RAID controller can also be implemented, thereby avoiding a problem of loss of data validity information due to any disk failure. The RAID controller may store data validity information of a strip unit in a solid-state drive, or may store data validity information of a strip unit in a hard disk drive. Therefore, by using the technical solution provided in this application, the RAID controller can use data validity information to read, write, or reconstruct data stored in the RAID group regardless of whether a disk in a RAID system is an SSD or a hard disk drive, thereby improving performance of reading, writing, and reconstruction of the RAID group.

An implementation of this application further provides a RAID controller. A structure of the RAID controller is shown in FIG. 8. The RAID controller 802 includes the processor 8021 and the storage medium 8022. The storage medium 8022 is configured to store a computer program, and when the RAID controller 802 runs, program code in the storage medium 8022 is executed, to implement operation steps of the methods performed by the RAID controller in FIG. 3 to FIG. 6. For brevity, details are not provided herein again.

An implementation of this application further provides a chip, and the chip includes a transceiver unit and a processing unit. The transceiver unit may be an input/output circuit or a communications interface, and the processing unit is a processor integrated on the chip, a microprocessor, or an integrated circuit. The chip may perform the method performed by the RAID controller in the foregoing implementations.

An implementation of this application further provides a computer-readable storage medium on which instructions are stored, and when the instructions are executed, the method performed by the RAID controller in the foregoing implementations is performed.

In an implementation of the implementations, a computer program product including instructions is provided, and when the instructions are executed, the method performed by the RAID controller in the foregoing implementations is performed.

All or some of the foregoing implementations may be implemented by using software, hardware, firmware, or any combination thereof. When software is used to implement the implementations, the foregoing implementations may be implemented completely or partially in a form of a computer program product. The computer program product includes one or more computer instructions. When the computer program instructions are loaded and executed on the computer, the procedures or functions according to the implementations of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person of ordinary skill in the art may be aware that units and algorithm steps in the examples described with reference to the implementations disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method implementations. Details are not described herein again.

In the several implementations provided in this application, it should be understood that the disclosed system, apparatus, and method may be implemented in another manner. For example, the described apparatus implementation is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions of the implementations.

In addition, functional units in the implementations of this application may be integrated into one processing unit, each of the units may exist alone physically, or two or more units are integrated into one unit.

The scope of protection shall be defined by the appended claims.

## Claims

1. A redundant array of independent disks, RAID, management method, wherein the method comprises:
obtaining (401), by a RAID controller, a data processing instruction, wherein the RAID controller is connected to a plurality of disks, at least two disks in the plurality of disks form a RAID group, the RAID group comprises a plurality of strips, the data processing instruction is used to instruct to process data corresponding to a first strip unit set, the first strip unit set comprises at least one strip unit, and the at least one strip unit belongs to at least one strip in the plurality of strips;
determining (403), by the RAID controller in strip data information, data validity information of each strip unit in the first strip unit set, wherein the strip data information comprises data validity information of each strip unit that is in the RAID group and that is used to store user data, and the strip data information is stored in the RAID controller; and
executing (404), by the RAID controller, the data processing instruction based on the data validity information of each strip unit in the first strip unit set;
wherein before the obtaining, by a RAID controller, a data processing instruction, the method further comprises:
creating, by the RAID controller, initial strip data information, wherein data validity information of each strip unit in the initial strip data information is invalid;
wherein the executing, by the RAID controller, the data processing instruction based on the data validity information of each strip unit in the first strip unit set comprises:
determining, by the RAID controller, whether the first strip unit set comprises strip units that all are used to store user data, when the data processing instruction is used to instruct to delete user data stored in each strip unit in the first strip unit set; and
if the first strip unit set comprises the strip units that all are used to store user data, updating the validity information of each strip unit in the first strip unit set in the strip data information to invalid; or
if the first strip unit set comprises a part of strip units that are in one strip and that are used to store user data, updating the data validity information of each strip unit in the first strip unit set in the strip data information to to-be-collected.

2. The method according to claim 1, wherein the executing, by the RAID controller, the data processing instruction based on the data validity information of each strip unit in the first strip unit set comprises:
updating, by the RAID controller, the data validity information of each strip unit in the first strip unit set in the strip data information to valid, when the data processing instruction is used to instruct to write data to the first strip unit set.

3. The method according to claim 2, wherein the method further comprises:
determining, by the RAID controller, a second strip unit set, wherein the second strip unit set comprises a strip unit that is in a strip comprising the strip unit in the first strip unit set and that is with to-be-collected data validity information; and
updating, by the RAID controller, data validity information of each strip unit in the second strip unit set in the strip data information to invalid.

4. The method according to any one of claims 1 to 3, wherein the method further comprises:
when a failure occurs on one of disks forming the RAID group, determining, by the RAID controller based on the strip data information, whether data validity information of a t^{th} strip unit that is in the faulty disk and that is used to store user data is valid, wherein t=1, ..., or T, and T indicates a quantity of all strip units used to store user data in the faulty disk; and
when the data validity information of the t^{th} strip unit used to store user data is valid, determining, based on user data in a third strip unit set and a check value of a strip comprising the t^{th} strip unit used to store user data, data in the t^{th} strip unit used to store user data, and writing the user data in the t^{th} strip unit used to store user data to a hot spare disk, wherein the third strip unit set comprises a strip unit that is in the strip comprising the t^{th} strip unit used to store user data and that is with valid data validity information and comprises a strip unit that is in the strip comprising the t^{th} strip unit used to store user data and that is with to-be-collected data validity information.

5. A RAID controller (700), wherein the RAID controller comprises:
an obtaining unit (701), configured to obtain a data processing instruction, wherein the data processing instruction is used to instruct to process data corresponding to a first strip unit set, the first strip unit set comprises at least one strip unit, the at least one strip unit belongs to at least one strip in a plurality of strips, and the plurality of strips belong to a RAID group formed by a plurality of disks that are connected to the RAID controller;
a storage unit (702), configured to store strip data information, wherein the strip data information comprises data validity information of each strip unit that is in the RAID group and that is used to store user data; and
a processing unit (703), configured to determine, in the strip data information stored in the storage unit, data validity information of each strip unit in the first strip unit set, wherein
the processing unit is further configured to execute the data processing instruction based on the data validity information of each strip unit in the first strip unit set;
wherein the processing unit is further configured to create initial strip data information and store the initial strip data information in the storage unit, and data validity information of each strip unit in the initial strip data information is invalid;
wherein the processing unit is specifically configured to: determine whether the first strip unit set comprises strip units that all are used to store user data, when the data processing instruction is used to instruct to delete user data stored in each strip unit in the first strip unit set; and
if the first strip unit set comprises the strip units that all are used to store user data, update validity information of each strip unit in the first strip unit set in the strip data information to invalid; or
if the first strip unit set comprises a part of strip units that are in one strip and that are used to store user data, update the data validity information of each strip unit in the first strip unit set in the strip data information to to-be-collected.

6. The RAID controller according to claim 5, wherein the processing unit is specifically configured to update the data validity information of each strip unit in the first strip unit set in the strip data information to valid, when the data processing instruction is used to instruct to write data to the first strip unit set.

7. The RAID controller according to claim 6, wherein the processing unit is further configured to: determine a second strip unit set, wherein the second strip unit set comprises a strip unit that is in a strip comprising the strip unit in the first strip unit set and that is with to-be-collected data validity information; and
update data validity information of each strip unit in the second strip unit set in the strip data information to invalid.

8. The RAID controller according to any one of claims 5 to 7, wherein the processing unit is further configured to: when a failure occurs on one of disks forming the RAID group, determine, based on the strip data information, whether data validity information of a t^{th} strip unit that is in the faulty disk and that is used to store user data is valid, wherein t=1, ..., or T, and T indicates a quantity of all strip units used to store user data in the faulty disk; and
when the data validity information of the t^{th} strip unit used to store user data is valid, determine, based on user data in a third strip unit set and a check value of a strip comprising the t^{th} strip unit used to store user data, data in the t^{th} strip unit used to store user data, and write the user data in the t^{th} strip unit used to store user data to a hot spare disk, wherein the third strip unit set comprises a strip unit that is in the strip comprising the t^{th} strip unit used to store user data and that is with valid data validity information and comprises a strip unit that is in the strip comprising the t^{th} strip unit used to store user data and that is with to-be-collected data validity information.

9. A RAID controller, wherein the RAID controller comprises a processor and a memory, the memory stores program code, and the processor is configured to invoke the program code in the memory, to perform the method according to any one of claims 1 to 4.

10. A RAID system, wherein the RAID system comprises at least one disk and the RAID controller according to any one of claims 5 to 8.

## Patentansprüche

1. Verwaltungsverfahren für redundantes Array von unabhängigen Festplatten, RAID, wobei das Verfahren umfasst:
Erhalten (401) einer Datenverarbeitungsanweisung durch einen RAID-Controller, wobei der RAID-Controller mit einer Vielzahl von Festplatten verbunden ist, wobei mindestens zwei Festplatten in der Vielzahl von Festplatten eine RAID-Gruppe bilden, die RAID-Gruppe eine Vielzahl von Streifen umfasst, die Datenverarbeitungsanweisung zum Anweisen verwendet wird, Daten zu verarbeiten, die einem ersten Streifeneinheitensatz entsprechen, der erste Streifeneinheitensatz mindestens eine Streifeneinheit umfasst und die mindestens eine Streifeneinheit zu mindestens einem Streifen in der Vielzahl von Streifen gehört,
Bestimmen (403) von Datengültigkeitsinformationen jeder Streifeneinheit in dem ersten Streifeneinheitensatz durch den RAID-Controller in Streifendateninformationen, wobei die Streifendateninformationen Datengültigkeitsinformationen jeder Streifeneinheit umfassen, die sich in der RAID-Gruppe befindet und zum Speichern von Benutzerdaten verwendet wird, und die Streifendateninformationen in dem RAID-Controller gespeichert sind; und
Ausführen (404) der Datenverarbeitungsanweisung durch den RAID-Controller basierend auf den Datengültigkeitsinformationen jeder Streifeneinheit im ersten Streifeneinheitensatz;
wobei vor dem Erhalten einer Datenverarbeitungsanweisung durch einen RAID-Controller das Verfahren ferner umfasst:
Erzeugen von anfänglichen Streifendateninformationen durch den RAID-Controller, wobei Datengültigkeitsinformationen jeder Streifeneinheit in den anfänglichen Streifendateninformationen ungültig sind;
wobei das Ausführen der Datenverarbeitungsanweisung durch den RAID-Controller basierend auf den Datengültigkeitsinformationen jeder Streifeneinheit in dem ersten Streifeneinheitensatz umfasst:
Bestimmen durch den RAID-Controller, ob der erste Streifeneinheitensatz Streifeneinheiten umfasst, die alle zum Speichern von Benutzerdaten verwendet werden, wenn die Datenverarbeitungsanweisung verwendet wird, um das Löschen von Benutzerdaten anzuweisen, die in jeder Streifeneinheit in dem ersten Streifeneinheitensatz gespeichert sind; und
wenn der erste Streifeneinheitensatz die Streifeneinheiten umfasst, die alle zum Speichern von Benutzerdaten verwendet werden, Aktualisieren der Gültigkeitsinformationen jeder Streifeneinheit in dem ersten Streifeneinheitensatz in den Streifendateninformationen auf "ungültig"; oder
wenn der erste Streifeneinheitensatz einen Teil von Streifeneinheiten umfasst, die sich in einem Streifen befinden und die zum Speichern von Benutzerdaten verwendet werden, Aktualisieren der Datengültigkeitsinformationen jeder Streifeneinheit in dem ersten Streifeneinheitensatz in den Streifendateninformationen auf "zu erfassen".

2. Verfahren gemäß Anspruch 1, wobei das Ausführen der Datenverarbeitungsanweisung durch den RAID-Controller basierend auf den Datengültigkeitsinformationen jeder Streifeneinheit in dem ersten Streifeneinheitensatz umfasst:
Aktualisieren, durch den RAID-Controller, der Datengültigkeitsinformationen jeder Streifeneinheit in dem ersten Streifeneinheitensatz in den Streifendateninformationen auf "gültig", wenn die Datenverarbeitungsanweisung zum Anweisen verwendet wird, Daten in den ersten Streifeneinheitensatz zu schreiben.

3. Verfahren gemäß Anspruch 2, wobei das Verfahren ferner umfasst:
Bestimmen eines zweiten Streifeneinheitensatzes durch den RAID-Controller, wobei der zweite Streifeneinheitensatz eine Streifeneinheit umfasst, die sich in einem Streifen befindet, der die Streifeneinheit im ersten Streifeneinheitensatz umfasst, und die "zu erfassende" Datengültigkeitsinformationen aufweist; und
Aktualisieren, durch den RAID-Controller, von Datengültigkeitsinformationen jeder Streifeneinheit in dem zweiten Streifeneinheitensatz in den Streifendateninformationen auf "ungültig".

4. Verfahren gemäß einem der Ansprüche 1 bis 3, wobei das Verfahren ferner umfasst:
wenn ein Fehler auf einer der Festplatten auftritt, die die RAID-Gruppe bilden, Bestimmen durch den RAID-Controller basierend auf den Streifendateninformationen, ob die Datengültigkeitsinformationen einer t-ten Streifeneinheit, die sich auf der fehlerhaften Festplatte befindet und die zum Speichern von Benutzerdaten verwendet wird, gültig sind, wobei t = 1, ... oder T ist und T eine Menge aller Streifeneinheiten angibt, die zum Speichern von Benutzerdaten auf der fehlerhaften Festplatte verwendet werden, und
wenn die Datengültigkeitsinformationen der t-ten Streifeneinheit, die zum Speichern von Benutzerdaten verwendet wird, gültig sind, Bestimmen von Daten in der t-ten Streifeneinheit, die zum Speichern von Benutzerdaten verwendet wird, basierend auf Benutzerdaten in einem dritten Streifeneinheitensatz und einem Prüfwert eines Streifens, der die t-te Streifeneinheit umfasst, die zum Speichern von Benutzerdaten verwendet wird, und Schreiben der Benutzerdaten in der t-ten Streifeneinheit, die zum Speichern von Benutzerdaten verwendet wird, auf eine "Hot Spare"-Festplatte, wobei der dritte Streifeneinheitensatz eine Streifeneinheit umfasst, die sich in dem Streifen befindet, der die t-te Streifeneinheit umfasst, die zum Speichern von Benutzerdaten verwendet wird und die gültige Datengültigkeitsinformationen aufweist und eine Streifeneinheit umfasst, die sich in dem Streifen befindet, der die t-te Streifeneinheit umfasst, die zum Speichern von Benutzerdaten verwendet wird und die "zu erfassende" Datengültigkeitsinformationen aufweist.

5. RAID-Controller (700), wobei der RAID-Controller umfasst:
eine Erhalteeinheit (701), die dazu konfiguriert ist, eine Datenverarbeitungsanweisung zu erhalten, wobei die Datenverarbeitungsanweisung zum Anweisen verwendet wird, Daten zu verarbeiten, die einem ersten Streifeneinheitensatz entsprechen, wobei der erste Streifeneinheitensatz mindestens eine Streifeneinheit umfasst, wobei die mindestens eine Streifeneinheit zu mindestens einem Streifen in einer Vielzahl von Streifen gehört, und wobei die Vielzahl von Streifen zu einer RAID-Gruppe gehört, die durch eine Vielzahl von Festplatten gebildet wird, die mit dem RAID-Controller verbunden sind;
eine Speichereinheit (702), die zum Speichern von Streifendateninformationen konfiguriert ist, wobei die Streifendateninformationen Datengültigkeitsinformationen jeder Streifeneinheit umfassen, die sich in der RAID-Gruppe befindet und zum Speichern von Benutzerdaten verwendet wird, und
eine Verarbeitungseinheit (703), die dazu konfiguriert ist, in den in der Speichereinheit gespeicherten Streifendateninformationen Datengültigkeitsinformationen jeder Streifeneinheit in dem ersten Streifeneinheitensatz zu bestimmen, wobei
die Verarbeitungseinheit ferner dazu konfiguriert ist, die Datenverarbeitungsanweisung basierend auf den Datengültigkeitsinformationen jeder Streifeneinheit in dem ersten Streifeneinheitensatz auszuführen;
wobei die Verarbeitungseinheit ferner dazu konfiguriert ist, anfängliche Streifendateninformationen zu erzeugen und die anfänglichen Streifendateninformationen in der Speichereinheit zu speichern, und Datengültigkeitsinformationen jeder Streifeneinheit in den anfänglichen Streifendateninformationen ungültig sind;
wobei die Verarbeitungseinheit speziell dazu konfiguriert ist: zu bestimmen, ob der erste Streifeneinheitensatz Streifeneinheiten umfasst, die alle zum Speichern von Benutzerdaten verwendet werden, wenn die Datenverarbeitungsanweisung zum Anweisen verwendet wird, in jeder Streifeneinheit in dem ersten Streifeneinheitensatz gespeicherte Benutzerdaten zu löschen; und
wenn der erste Streifeneinheitensatz die Streifeneinheiten umfasst, die alle zum Speichern von Benutzerdaten verwendet werden, Gültigkeitsinformationen jeder Streifeneinheit in dem ersten Streifeneinheitensatz in den Streifendateninformationen auf "ungültig" zu aktualisieren, oder
wenn der erste Streifeneinheitensatz einen Teil von Streifeneinheiten umfasst, die sich in einem Streifen befinden und die zum Speichern von Benutzerdaten verwendet werden, die Datengültigkeitsinformationen jeder Streifeneinheit in dem ersten Streifeneinheitensatz in den Streifendateninformationen auf "zu erfassen" zu aktualisieren.

6. RAID-Controller gemäß Anspruch 5, wobei die Verarbeitungseinheit speziell dazu ausgelegt ist, die Datengültigkeitsinformationen jeder Streifeneinheit im ersten Streifeneinheitensatz in den Streifendateninformationen auf "gültig" zu aktualisieren, wenn die Datenverarbeitungsanweisung verwendet wird, um das Schreiben von Daten in den ersten Streifeneinheitensatz anzuweisen.

7. RAID-Controller gemäß Anspruch 6, wobei die Verarbeitungseinheit ferner dazu konfiguriert ist: einen zweiten Streifeneinheitensatz zu bestimmen, wobei der zweite Streifeneinheitensatz eine Streifeneinheit umfasst, die sich in einem Streifen befindet, der die Streifeneinheit in dem ersten Streifeneinheitensatz umfasst, und die "zu erfassende" Datengültigkeitsinformationen aufweist; und
die Datengültigkeitsinformationen jeder Streifeneinheit in dem zweiten Streifeneinheitensatz in den Streifendateninformationen auf "ungültig" zu aktualisieren.

8. RAID-Controller gemäß einem der Ansprüche 5 bis 7, wobei die Verarbeitungseinheit ferner dazu konfiguriert ist: wenn ein Fehler auf einer der die RAID-Gruppe bildenden Festplatten auftritt, basierend auf den Streifendateninformationen zu bestimmen, ob die Datengültigkeitsinformationen einer t-ten Streifeneinheit, die sich auf der fehlerhaften Festplatte befindet und zum Speichern von Benutzerdaten verwendet wird, gültig sind, wobei t = l, ... oder T und T eine Menge aller Streifeneinheiten angibt, die zum Speichern von Benutzerdaten auf der fehlerhaften Festplatte verwendet werden, und
wenn die Datengültigkeitsinformationen der t-ten Streifeneinheit, die zum Speichern von Benutzerdaten verwendet wird, gültig sind, Daten in der t-ten Streifeneinheit, die zum Speichern von Benutzerdaten verwendet werden, basierend auf Benutzerdaten in einem dritten Streifeneinheitensatz und einem Prüfwert eines Streifens, der die t-te Streifeneinheit umfasst, die zum Speichern von Benutzerdaten verwendet wird, zu bestimmen und Benutzerdaten in der t-ten Streifeneinheit, die zum Speichern von Benutzerdaten verwendet wird, auf eine "Hot Spare"-Festplatte zu schreiben, wobei der dritte Streifeneinheitensatz eine Streifeneinheit umfasst, die sich in dem Streifen befindet, der die t-te Streifeneinheit umfasst, die zum Speichern von Benutzerdaten verwendet wird und die gültige Datengültigkeitsinformationen aufweist und eine Streifeneinheit umfasst, die sich in dem Streifen befindet, der die t-te Streifeneinheit umfasst, die zum Speichern von Benutzerdaten verwendet wird und die "zu erfassende" Datengültigkeitsinformationen aufweist.

9. RAID-Controller, wobei der RAID-Controller einen Prozessor und einen Speicher umfasst, der Speicher Programmcode speichert und der Prozessor dazu konfiguriert ist, den Programmcode in dem Speicher aufzurufen, um das Verfahren gemäß einem der Ansprüche 1 bis 4 durchzuführen.

10. RAID-System, wobei das RAID-System mindestens eine Festplatte und den RAID-Controller gemäß einem der Ansprüche 5 bis 8 umfasst.

## Revendications

1. Procédé de gestion d'un groupe redondant de disques indépendants, RAID, le procédé comprenant :
l'obtention (401), par un contrôleur RAID, d'une instruction de traitement de données, le contrôleur RAID étant connecté à une pluralité de disques, au moins deux disques dans la pluralité de disques formant un groupe RAID, le groupe RAID comprenant une pluralité de bandes, l'instruction de traitement de données étant utilisée pour ordonner de traiter des données correspondant à un premier ensemble d'unités de bande, le premier ensemble d'unités de bande comprenant au moins une unité de bande, et l'au moins une unité de bande appartenant à au moins une bande dans la pluralité de bandes ;
la détermination (403), par le contrôleur RAID dans les informations de données de bande, d'informations de validité de données de chaque unité de bande dans le premier ensemble d'unités de bande, les informations de données de bande comprenant des informations de validité de données de chaque unité de bande qui se trouve dans le groupe RAID et qui est utilisée pour stocker des données utilisateur, et les informations de données de bande étant stockées dans le contrôleur RAID, et
l'exécution (404), par le contrôleur RAID, de l'instruction de traitement de données sur la base des informations de validité de données de chaque unité de bande dans le premier ensemble d'unités de bande ;
avant l'obtention, par un contrôleur RAID, d'une instruction de traitement de données, le procédé comprenant en outre :
la création, par le contrôleur RAID, d'informations de données de bande initiales, des informations de validité de données de chaque unité de bande dans les informations de données de bande initiales n'étant pas valides ;
l'exécution, par le contrôleur RAID, de l'instruction de traitement de données sur la base des informations de validité de données de chaque unité de bande dans le premier ensemble d'unités de bande comprenant :
la détermination, par le contrôleur RAID, si le premier ensemble d'unités de bande comprend des unités de bande qui sont toutes utilisées pour stocker des données utilisateur, lorsque l'instruction de traitement de données est utilisée pour ordonner de supprimer des données utilisateur stockées dans chaque unité de bande du premier ensemble d'unités de bande ; et
si le premier ensemble d'unités de bande comprend les unités de bande qui sont toutes utilisées pour stocker des données utilisateur, la mise à jour des informations de validité de chaque unité de bande dans le premier ensemble d'unités de bande dans les informations de données de bande comme invalides ; ou
si le premier ensemble d'unités de bande comprend une partie des unités de bande qui sont dans une bande et qui sont utilisées pour stocker des données utilisateur, la mise à jour des informations de validité de données de chaque unité de bande dans le premier ensemble d'unités de bande dans les informations de données de bande à collecter.

2. Procédé selon la revendication 1, l'exécution, par le contrôleur RAID, de l'instruction de traitement de données sur la base des informations de validité de données de chaque unité de bande dans le premier ensemble d'unités de bande comprenant :
la mise à jour, par le contrôleur RAID, des informations de validité de données de chaque unité de bande dans le premier ensemble d'unités de bande dans les informations de données de bande comme valides, lorsque l'instruction de traitement de données est utilisée pour ordonner d'écrire des données dans le premier ensemble d'unités de bande.

3. Procédé selon la revendication 2, le procédé comprenant en outre :
la détermination, par le contrôleur RAID, d'un deuxième ensemble d'unités de bande, le deuxième ensemble d'unités de bande comprenant une unité de bande qui est dans une bande comprenant l'unité de bande dans le premier ensemble d'unités de bande et qui contient des informations de validité de données à collecter ; et
la mise à jour par le contrôleur RAID d'informations de validité de données de chaque unité de bande du deuxième ensemble d'unités de bande dans les informations de données de bande comme invalides.

4. Procédé selon l'une quelconque des revendications 1 à 3, le procédé comprenant en outre :
lorsqu'une défaillance se produit sur l'un des disques formant le groupe RAID, la détermination, par le contrôleur RAID sur la base des informations de données de bande, si des informations de validité de données d'une t^{ième} unité de bande qui se trouve dans le disque défectueux et qui est utilisée pour stocker des données utilisateur sont valides, avec t=1,..., ou T, et T indique une quantité de toutes les unités de bande utilisées pour stocker des données utilisateur dans le disque défectueux ; et
lorsque les informations de validité de données de la t^{ième} unité de bande utilisée pour stocker des données utilisateur sont valides, la détermination, sur la base des données utilisateur dans un troisième ensemble d'unités de bande et d'une valeur de contrôle d'une bande comprenant la t^{ième} unité de bande utilisée pour stocker des données utilisateur, des données dans la t^{ième} unité de bande utilisée pour stocker des données utilisateur, et l'écriture des données utilisateur dans la t^{ième} unité de bande utilisée pour stocker des données utilisateur sur un disque de secours à chaud, le troisième ensemble d'unités de bande comprenant une unité de bande qui se trouve dans la bande comprenant la t^{ième} unité de bande utilisée pour stocker des données utilisateur et qui contient des informations de validité de données valides, et comprenant une unité de bande qui se trouve dans la bande comprenant la t^{ième} unité de bande utilisée pour stocker des données utilisateur et qui contient des informations de validité de données à collecter.

5. Contrôleur RAID (700), le contrôleur RAID comprenant :
une unité d'obtention (701), configurée pour obtenir une instruction de traitement de données, l'instruction de traitement de données étant utilisée pour ordonner le traitement des données correspondant à un premier ensemble d'unités de bande, le premier ensemble d'unités de bande comprenant au moins une unité de bande, l'au moins une unité de bande appartenant à au moins une bande dans une pluralité de bandes, et la pluralité de bandes appartenant à un groupe RAID formé par une pluralité de disques qui sont connectés au contrôleur RAID ;
une unité de stockage (702), configurée pour stocker des informations de données de bande, les informations de données de bande comprenant des informations de validité de données de chaque unité de bande qui est dans le groupe RAID et qui est utilisée pour stocker des données d'utilisateur ; et
une unité de traitement (703), configurée pour déterminer, dans les informations de données de bande stockées dans l'unité de stockage, des informations de validité de données de chaque unité de bande dans le premier ensemble d'unités de bande,
l'unité de traitement étant en outre configurée pour exécuter l'instruction de traitement de données sur la base des informations de validité de données de chaque unité de bande dans le premier ensemble d'unités de bande ;
l'unité de traitement étant en outre configurée pour créer des informations de données de bande initiales et stocker les informations de données de bande initiales dans l'unité de stockage et les informations de validité de données de chaque unité de bande dans les informations de données de bande initiales n'étant pas valides ;
l'unité de traitement étant spécifiquement configurée pour : déterminer si le premier ensemble d'unités de bande comprend des unités de bande qui sont toutes utilisées pour stocker des données utilisateur, lorsque l'instruction de traitement de données est utilisée pour ordonner de supprimer les données utilisateur stockées dans chaque unité de bande du premier ensemble d'unités de bande ; et
si le premier ensemble d'unités de bande comprend les unités de bande qui sont toutes utilisées pour stocker des données utilisateur, mettre à jour les informations de validité de chaque unité de bande dans le premier ensemble d'unités de bande dans les informations de données de bande comme invalides ; ou
si le premier ensemble d'unités de bande comprend une partie des unités de bande qui sont dans une bande et qui sont utilisées pour stocker des données utilisateur, mettre à jour les informations de validité de données de chaque unité de bande dans le premier ensemble d'unités de bande dans les informations de données de bande à collecter.

6. Contrôleur RAID selon la revendication 5, l'unité de traitement étant spécifiquement configurée pour mettre à jour les informations de validité de données de chaque unité de bande dans le premier ensemble d'unités de bande dans les informations de données de bande comme valides lorsque l'instruction de traitement de données est utilisée pour demander d'écrire des données dans le premier ensemble d'unités de bande.

7. Contrôleur RAID selon la revendication 6, l'unité de traitement étant en outre configurée pour : déterminer un deuxième ensemble d'unités de bande, le deuxième ensemble d'unités de bande comprenant une unité de bande qui est dans une bande comprenant l'unité de bande dans le premier ensemble d'unités de bande et qui contient des informations de validité de données à collecter ; et
mettre à jour les informations de validité de données de chaque unité de bande du deuxième ensemble d'unités de bande dans les informations de données de bande comme invalides.

8. Contrôleur RAID selon l'une quelconque des revendications 5 à 7, l'unité de traitement étant en outre configurée pour : lorsqu'une défaillance se produit sur l'un des disques formant le groupe RAID, déterminer, sur la base des informations de données de bande, si les informations de validité de données d'une t^{ième} unité de bande qui se trouve dans le disque défectueux et qui est utilisée pour stocker des données utilisateur sont valides, avec t=1,..., ou T, et T indique une quantité de toutes les unités de bande utilisées pour stocker des données utilisateur dans le disque défectueux ; et
lorsque les informations de validité de données de la t^{ième} unité de bande utilisée pour stocker des données utilisateur sont valides, déterminer, sur la base des données utilisateur dans un troisième ensemble d'unités de bande et d'une valeur de contrôle d'une bande comprenant la t^{ième} unité de bande utilisée pour stocker des données utilisateur, les données dans la t^{ième} unité de bande utilisée pour stocker des données utilisateur, et écrire les données utilisateur dans la t^{ième} unité de bande utilisée pour stocker des données utilisateur sur un disque de secours à chaud, le troisième ensemble d'unités de bande comprenant une unité de bande qui se trouve dans la bande comprenant la t^{ième} unité de bande utilisée pour stocker des données utilisateur et qui contient des informations de validité de données valides, et comprenant une unité de bande qui se trouve dans la bande comprenant la t^{ième} unité de bande utilisée pour stocker des données utilisateur et qui contient des informations de validité de données à collecter.

9. Contrôleur RAID, le contrôleur RAID comprenant un processeur et une mémoire, la mémoire stockant un code de programme, et le processeur étant configuré pour appeler le code de programme dans la mémoire, afin de réaliser le procédé selon l'une quelconque des revendications 1 à 4.

10. Système RAID, le système RAID comprenant au moins un disque et le contrôleur RAID selon l'une quelconque des revendications 5 à 8.
